# EUROPÄISCHE PATENTSCHRIFT

(11) **EP 0 765 719 B1**
(45) Veröffentlichungstag und Bekanntmachung des Hinweises auf die Patenterteilung: **15.11.2000**
(21) Anmeldenummer: 96111146.5
(22) Anmeldetag: 11.07.1996
(51) Int. Cl.: B27C 5/10, B23Q 11/00, B23Q 9/00

(54) **Oberfräse**
Router
Fraiseuse portative

(30) Priorität: 28.09.1995 DE 19536133
(43) Veröffentlichungstag der Anmeldung: 02.04.1997
(73) Patentinhaber: FESTO Tooltechnic GmbH & Co., 73728 Esslingen (DE)
(72) Erfinder: Schirrmacher, Roland, 82266 Inning a.A. (DE)
(74) Vertreter: Reimold, Otto, Dipl.-Phys.Dr.

(56) Entgegenhaltungen:
- DE-A- 3 934 358
- GB-A- 2 196 571
- US-A- 2 705 032
- US-A- 3 635 268
- US-A- 3 853 160
- US-A- 4 409 699

## Beschreibung

Die Erfindung betrifft eine als Handwerkzeugmaschine ausgebildete Oberfräse mit einem werkstückseitigen Maschinentisch, der eine axiale Durchgriffsöffnung für den Durchgriff des von oberhalb des Maschinentischs nach unten zum Werkstück ragenden Werkzeugs umschließt.

Solche Oberfräsen gibt es mit und ohne Staubabsaugung sowie mit verschiedenem sonstigem Zubehör, so beispielsweise mit Kopierringen, Zirkeleinrichtungen usw. So ist beispielsweise aus der US-A-4 409 699 eine Oberfräse bekannt, deren Maschinentisch ein Staubabsaugbehältnis zugeordnet ist. Dieses Staubabsaugbehältnis weist eine an der Unterseite des Maschinentischs zu befestigende, das Werkzeug umschließende Basisplatte mit einem im montierten Zustand neben dem Maschinentisch nach oben gerichteten Absaugstutzen auf. Der Unterseite der Basisplatte ist ein Absaugkanalteil zugeordnet, das in radialer Steckverbindung mit der Basisplatte steht und eine unterseitige Begrenzung für einen vom Werkzeug zum Absaugstutzen verlaufenden Absaugkanal bildet.

In diesem Zusammenhang liegt der vorliegenden Erfindung die Aufgabe zugrunde, eine hinsichtlich des Zubehörs möglichst vielseitige Oberfräse zu schaffen.

Diese Aufgabe wird erfindungsgemäß dadurch gelöst, daß der Maschinentisch eine teilringartige Gestalt aufweist, so daß eine in der Tischebene radial von außen nach innen zur Durchgriffsöffnung durchgehende und über die Höhe des Maschinentischs durchgehend ausgebildete Durchgangsöffnung zum Eingreifen eines am Maschinentisch lösbar befestigbaren Zubehörteils, z.B. ein Staubabsaugbehältnis, ein Kopierringhalter, eine Zirkeleinrichtung, eine Maschinentisch-Unterlegplatte usw., gebildet wird.

Es handelt sich also nicht wie seither um einen rundum geschlossenen, sondern um einen aufgrund der Durchgangsöffnung sozusagen mit einem breiten Schlitz versehenen Maschinentisch. In der Durchgangsöffnung kann das jeweilige Zubehörteil angebracht werden, das, da die Durchgangsöffnung den Maschinentisch in Höhenrichtung durchsetzt, über den Maschinentisch vorstehen kann. Die Montage eines in dieser Weise festgelegten Zubehörteils kann schnell und mühelos erfolgen. Außerdem kann das Zubehörteil sehr nahe zum Werkstück und zum Werkzeug angeordnet werden.

Ausführungsbeispiele der Erfindung werden nun anhand der Zeichnung erläutert. Es zeigen:
- Fig. 1: eine Oberfräse in stark schematisierter Seitenansicht gemäß Pfeil I in Fig. 2,
- Fig. 2: die Oberfräse nach Fig. 1 im Horizontalschnitt gemäß der Schnittlinie II-II, so daß der Maschinentisch in Draufsicht sichtbar ist,
- Fig. 3: ein in Zusammenhang mit der Oberfräse nach den Fig. 1 und 2 verwendbares Staubabsaugbehältnis als Zubehörteil in vergrößerter Schrägansicht,
- Fig. 4: das Staubabsaugbehältnis nach Fig. 3 im am Maschinentisch sitzenden Zustand in zur Fig. 1 rechtwinkeligen Seitenansicht gemäß Pfeil IV, wobei strichpunktiert eine ebenfalls mögliche umgekehrte Lage des Staubabsaugbehältnisses am Maschinentisch mit vertauschter Ober- und Unterseite angedeutet ist,
- Fig. 5: eine der Fig. 4 entsprechende Seitenansicht eines am Maschinentisch in umgekehrter Lage wie in Fig. 4 befestigten Staubabsaugbehältnisses mit einer zusätzlichen Führungsrolle, zusammen mit einem im Schnitt dargestellten Werkstück,
- Fig. 6: ein weiteres Zubehörteil in Gestalt eines Kopierringhalters mit eingesetztem Kopierring in gesonderter, vom Maschinentisch entfernter Darstellung in Seitenansicht gemäß Pfeil VI in Fig. 7,
- Fig. 7: den Kopierringhalter nach Fig. 6 in Draufsicht gemäß Pfeil VII, wobei strichpunktiert die Umrisse des Maschinentisches angedeutet sind,
- Fig. 8: ein in die Durchgangsöffnung einsetzbares Halteteil in gesonderter, schematischer Schrägansicht, wobei dieses Halteteil verschiedener Zubehörteile sein kann,
- Fig. 9: ein von einer Zirkeleinrichtung mit einem Halteteil gemäß Fig. 8 gebildetes Zubehörteil im am Maschinentisch sitzenden Zustand in schematischer Draufsicht,
- Fig. 10: ein als Maschinentisch-Unterlegplatte zum Vergrößern der Auflagefläche dienendes Zubehörteil zusammen mit dem noch von dem Zubehörteil getrennten Maschinentisch und einer in Zusammenhang mit der Unterlegplatte verwendbaren Führungsschiene, wobei die Unterlegplatte von der Führungsschiene abgehoben ist, im Querschnitt gemäß der Schnittlinie X-X in Fig. 12,
- Fig. 11: die Anordnung nach Fig. 10 bei am Maschinentisch befestigter und auf der Führungsschiene sitzender Unterlegplatte und
- Fig. 12: die Anordnung nach Fig. 11 in Draufsicht gemäß Pfeil XII, wobei die Führungsschiene, wie auch in Fig. 11, abgeschnitten dargestellt ist.

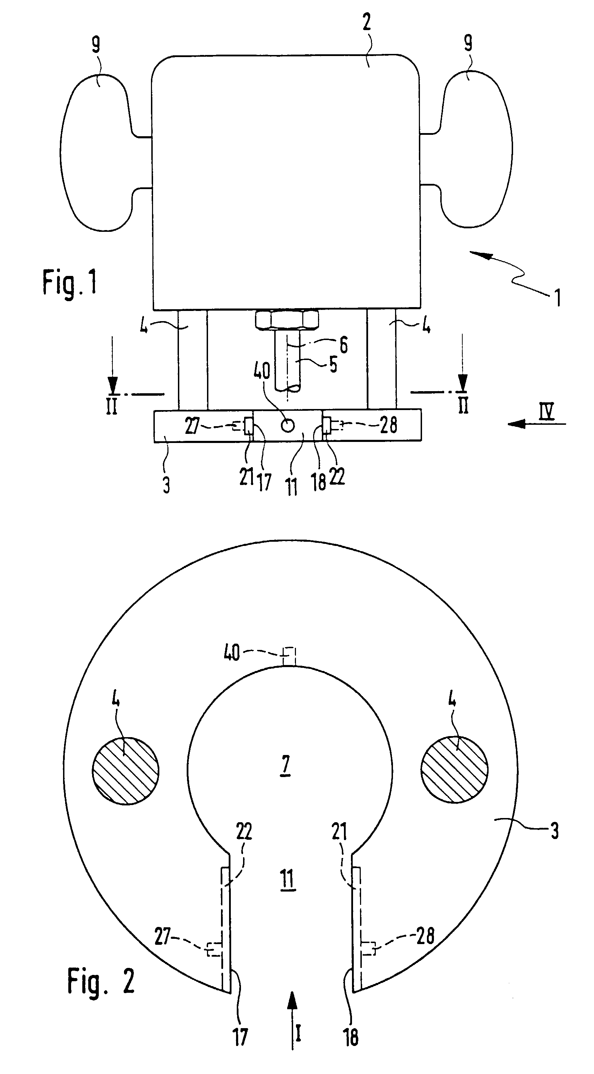

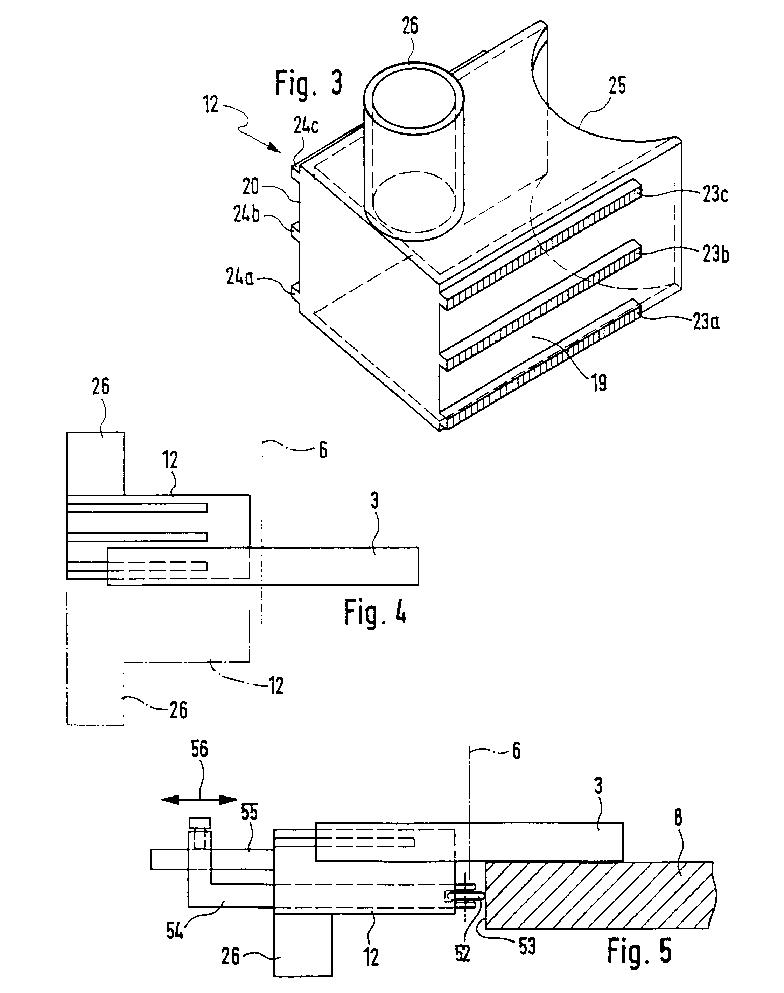

Bei der in Fig. 1 insgesamt angedeuteten Handwerkzeugmaschine handelt es sich um eine Oberfräse 1, die in üblicher Weise ein Maschinengehäuse 2 aufweist, das durch vom Maschinentisch 3 hochstehende Säulen 4 in der Höhe gehalten wird. Vom Maschinengehäuse 2 ragt ein auswechselbar eingespanntes Werkstück-Bearbeitungswerkzeug, d. h. ein Fräswerkzeug 5, nach unten, das abgeschnitten dargestellt ist, so daß nur sein eingespannter Werkzeugschaft ersichtlich ist. Das Fräswerkzeug 5 wird mittels eines im Maschinengehäuse 2 enthaltenen Maschinenmotors zu einer Rotationsbewegung um die Werkzeugachslinie 6 angetrieben. Der Maschinentisch 3 enthält eine axial durchgehende Durchgriffsöffnung 7, durch die hindurch das von oberhalb des Maschinentischs kommende Fräswerkzeug 5 nach unten hin zum zu bearbeitenden Werkstück 8 (nur in Fig. 5 angedeutet) vorstehen kann. Die Oberfräse 1 wird mit ihrem Maschinentisch 3, der regelmäßig eine plattenartige Gestalt aufweist, auf das jeweilige Werkstück 8 gestellt und dann über das Werkstück bewegt, so daß das über die Unterseite des Maschinentischs 3 vorstehende Fräswerkzeug am Werkstück angreift. In Fig. 1 sind noch zwei seitlich an das Maschinengehäuse 2 angesetzte Handgriffe 9, 10 zum Halten und Führen der Oberfräse bei der Werkstückbearbeitung angedeutet. Das Ausmaß, um das das Fräswerkzeug 5 nach unten hin über den Maschinentisch 3 vorsteht, läßt sich durch eine Verstellung des Maschinengehäuses 2 an den Säulen 4 einstellen.

Derartige Oberfräsen sind in großer Vielzahl und Vielfalt bekannt, so daß die obige Beschreibung für das allgemeine Verständnis einer solchen Oberfräse genügen mag.

Der Maschinentisch 3 weist eine teilringartige Gestalt auf, so daß eine in der Tischebene radial von außen nach innen zur Durchgriffsöffnung 7 durchgehende Durchgangsöffnung 11 gebildet wird. Dabei ist die Durchgangsöffnung 11 auch über die Höhe des Maschinentisches 3 durchgehend ausgebildet. Die Durchgangsöffnung 11 bildet sozusagen einen verhältnismäßig breiten Schlitz. Wenn hier von einer teilringartigen Gestalt des Maschinentischs 3 gesprochen wird, so ist damit selbstverständlich auch eine U-ähnliche Gestalt od.dgl. gemeint.

Die Durchgangsöffnung 11 dient zum Eingreifen eines am Maschinentisch 3 lösbar befestigbaren Zubehörteils 12, 13, 14 oder 15, wobei es sich in den aus der Zeichnung hervorgehenden Fällen um ein Staubabsaugbehältnis (Zubehörteil 12), einen Kopierringhalter (Zubehörteil 13), eine Zirkeleinrichtung (Zubehörteil 14) bzw. um eine Maschinentisch-Unterlegplatte (Zubehörteil 15) handelt. Die Zubehörteile sind auswechselbar befestigbar, so daß sozusagen ein baukastenartiger Aufbau vorliegt. Es versteht sich, daß alle möglichen und nicht nur die dargestellten Zubehörteile bei entsprechend angepaßter Gestaltung in Frage kommen.

Zweckmäßigerweise ist das jeweilige Zubehörteil 12, 13, 14 bzw. 15 über eine Steckeinrichtung und/oder eine Verriegelungseinrichtung am Maschinentisch 3 befestigbar. Bei den gezeigten Ausführungsbeispielen liegt bei dem Staubabsaugbehältnis 12 nur eine Steckeinrichtung vor, während die anderen Zubehörteile 13, 14, 15 über eine Steck- und Verriegelungseinrichtung am Maschinentisch 3 befestigbar sind.

Das jeweilige Zubehörteil 12, 13, 14, 15 bzw. im Falle der Zubehörteile 14 und 15 ein zu diesem gehörendes Halteteil 16 ist in radialer Richtung in die Durchgangsöffnung 11 steckbar und dabei an den die Durchgangsöffnung 11 seitlich begrenzenden Randflächen 17, 18 des Maschinentischs 3 geführt. Die beiden durch die Durchgangsöffnung 11 voneinander getrennten Randflächen 17, 18 verlaufen parallel zueinander.

Die Befestigung der Zubehörteile am Maschinentisch 3 erfolgt zweckmäßigerweise an den die Durchgangsöffnung 11 seitlich begrenzenden Randflächen 17, 18 des Maschinentischs 3. Hierzu sind an den Randflächen 17, 18 Befestigungsmittel und an den im befestigten Zustand den Randflächen 17, 18 benachbarten Seiten 19, 20 des Zubehörteils 12, 13, 14, 15 bzw. von dessen Halteteil 16 mit den Befestigungsmitteln zusammenwirkende Befestigungs-Gegenmittel angeordnet.

Bei der dargestellten Oberfräse werden die Befestigungsmittel dadurch gebildet, daß an jeder die Durchgangsöffnung 11 begrenzenden Randfläche 17, 18 eine in Randflächen-Längsrichtung verlaufende Stecknut 21 bzw. 22 angeordnet ist, der mindestens eine entsprechend verlaufende und in die Stecknut passende Steckleiste als am Zubehörteil angeordnetes Befestigungs-Gegenmittel zugeordnet ist. Bei dem das aus den Fig. 3 bis 5 hervorgehende Staubabsaugbehältnis bildenden Zubehörteil 12 sind an jeder Seite 19, 20 mehrere, beim Ausführungsbeispiel drei, parallel mit Höhenabstand zueinander verlaufende Steckleisten 23a, 23b, 23c bzw. 24a, 24b, 24c vorhanden, während es bei den Zubehörteilen 13, 14, 15 bzw. dem Halteteil 16 nur eine Steckleiste 23 bzw. 24 ist. Das jeweilige Zubehörteil ist also mit seinen Steckleisten in die Stecknuten des Maschinentisches 3 steckbar.

Zum Herstellen dieser Steckverbindung könnte die Anzahl der Stecknuten und Steckleisten auch anders sein. Ferner könnten umgekehrt die Stecknuten am Zubehörteil und die Steckleisten am Maschinentisch angeordnet sein.

Wie im Falle des Staubabsaugbehältnisses 12 kann es zweckmäßig sein, daß das Zubehörteil in radialer Richtung verstellbar am Maschinentisch 3 befestigbar ist. Auf diese Weise kann man den Abstand zwischen dem Zubehörteil und dem Fräswerkzeug 5 in Abhängigkeit vom Werkzeugdurchmesser einstellen, so daß man das Staubabsaugbehältnis 12 so nahe wie möglich an das Werkzeug bringen kann.

Zu diesem Zwecke, d. h. zum verstellbaren Befestigen in radialer Richtung, kann die jeweilige Steckleiste 23a, 23b, 23c, 24a, 24b, 24c klemmend in die jeweilige Stecknut 21, 22 eingreifen. In Fig. 3 ist angedeutet, daß die Steckleisten hierzu an ihrer Oberfläche eine Riffelung od.dgl. Oberflächengestaltung aufweisen können, um eine die Klemmung in den Stecknuten bewirkende Reibung zu erhalten.

Des weiteren kann es zweckmäßig sein, daß das eine oder andere Zubehörteil in unterschiedlichen Höhenlagen am Maschinentisch 3 befestigt werden kann. Bei den dargestellten Ausführungsbeispielen ist dies bei dem das Staubabsaugbehältnis bildenden Zubehörteil 12 der Fall, das, wie bereits erwähnt, an jeder Seite drei mit Höhenabstand parallel zueinander verlaufende Steckleisten aufweist, so daß es in unterschiedlichen Höhen jeweils mit einer anderen Steckleiste in Steckverbindung mit dem Maschinentisch 3 gebracht werden kann.

Die geschilderte Steckverbindung ermöglicht es außerdem, das jeweilige Zubehörteil umdrehbar, d. h. mit vertauschter Ober- und Unterseite, am Maschinentisch zu befestigen. Dies geht aus den Fig. 4 und 5 hervor, in denen das Staubabsaugbehältnis 12 in seinen beiden mit Bezug auf einander umgekehrten Lagen gezeigt ist.

Das Staubabsaugbehältnis 12 weist eine im befestigten Zustand der Durchgriffsöffnung 7 bzw. dem Werkzeug 5 zugewandte offene Vorderseite 25 auf, durch die der bei der spanenden Bearbeitung des Werkstückes entstehende Staub in das Staubabsaugbehältnis 12 eintritt. Ferner ist am Staubabsaugbehältnis 12 noch ein Absaugstutzen 26 zum Anschließen einer den Staub absaugenden, nicht dargestellten Saugleitung angeordnet. Ansonsten weist das dargestellte Staubabsaugbehältnis 12 eine kastenartige Gestalt auf. Es kann aus durchsichtigem Kunststoffmaterial bestehen. Die offene Vorderseite 25 kann zur Anpassung an das rotierende Werkzeug in Draufsicht von oben oder unten eingebaucht abgerundet sein.

Die anderen Zubehörteile 13, 14, 15 sind im am Maschinentisch 3 befestigten Zustand in radialer Richtung nicht verstellbar, da hier eine Verriegelung zwischen dem Zubehörteil und dem Maschinentisch stattfindet. Hierzu enthalten die an den die Durchgangsöffnung 11 seitlich begrenzenden Randflächen 17, 18 angeordneten Befestigungsmittel an jeder Randfläche 17, 18 eine Verriegelungsausnehmung 27 bzw. 28. Dementsprechend enthalten die an den Seiten 19, 20 des Zubehörteils 13, 14, 15 bzw. des Halteteils 16 angeordneten Befestigungs-Gegenmittel an jeder Zubehör- bzw. Halteteilseite einen der betreffenden Verriegelungsausnehmung zugeordneten Verriegelungsvorsprung 29 bzw. 30. Die Anzahl der Verriegelungsausnehmungen und Verriegelungsvorsprünge könnte auch anders sein. Ferner könnten sich prinzipiell die Verriegelungsvorsprünge umgekehrt am Maschinentisch und die Verriegelungsausnehmungen am Zubehörteil bzw. an dessen Halteteil 16 befinden.

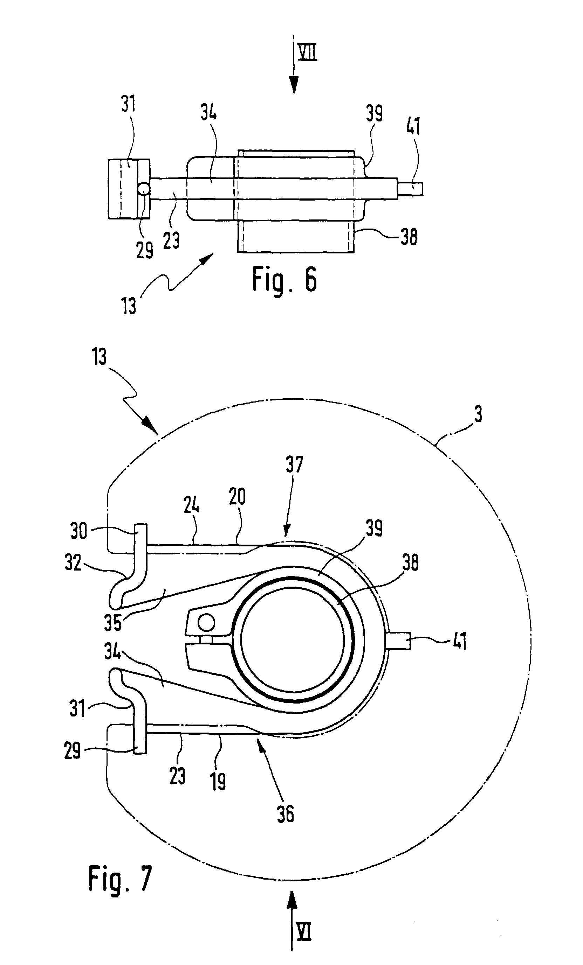

Bei den Ausführungsbeispielen nach den Fig. 6 bis 12 ist das jeweilige Zubehörteil mit dem Maschinentisch sowohl zusammengesteckt als auch verriegelt. In diesem Zusammenhang ist es zweckmäßig, daß der jeweilige Verriegelungsvorsprung 29 bzw. 30 an der Steckleiste 23 bzw. 24 und die Verriegelungsausnehmung 27 bzw. 28 an der Stecknut 21 bzw. 22 angeordnet ist. Auch hier könnte die Anordnung prinzipiell so variiert werden, daß die Verriegelungsvorsprünge an den Stecknuten und die Verriegelungsausnehmungen an den Steckleisten angeordnet sind.

Wie aus der Zeichnung ferner hervorgeht, ist an den beiden Seiten 19, 20 des jeweiligen Zubehörteils 13, 14, 15 bzw. des Halteteils 16 jeweils ein Verriegelungsvorsprung 29 bzw. 30 und an den beiden Randflächen 17, 18 des Maschinentischs 3 jeweils eine Verriegelungsausnehmung 27 bzw. 28 angeordnet.

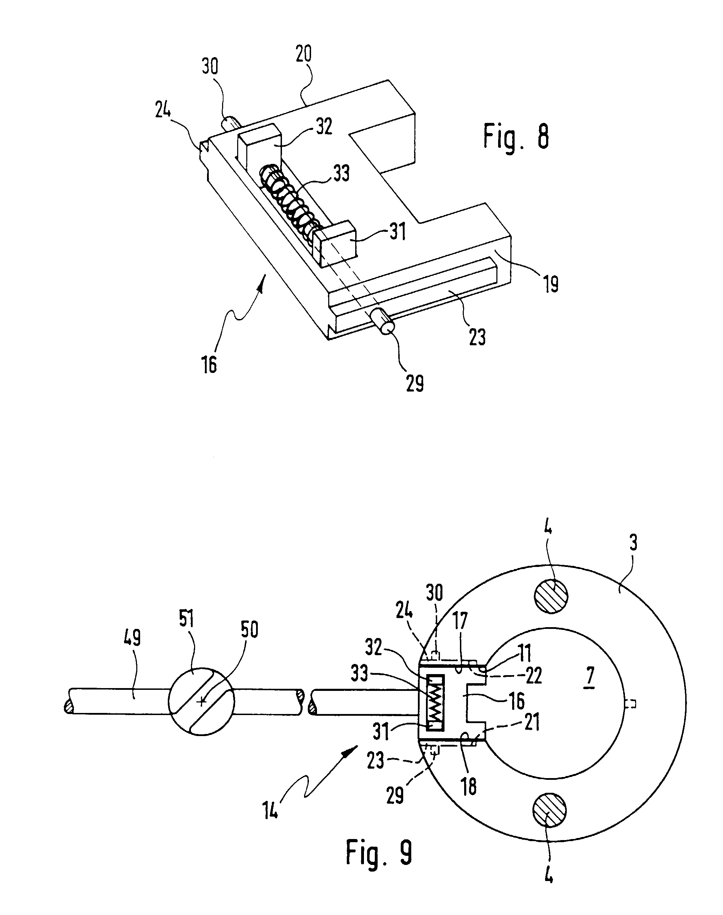

Jeder Verriegelungsvorsprung 29, 30 ist in Querrichtung, d. h. auf die jeweilige Verriegelungsausnehmung hin und von dieser weg, bewegbar, wobei er sich beim Einsetzen des Zubehörteils bzw. des Halteteils 16 in die Durchgangsöffnung 11 des Maschinentischs und bei der Entnahme in seiner unwirksamen, außer Eingriff mit der jeweiligen Verriegelungsausnehmung stehenden Stellung und bei befestigtem Zubehör bzw. Halteteil in seiner vorstehenden und dabei in die Verriegelungsausnehmung eingreifenden wirksamen Stellung befindet. Dabei ist zweckmäßigerweise vorgesehen, daß der jeweilige Verriegelungsvorsprung 29 bzw. 30 mit einer Handhabe 31 bzw. 32 verbunden und mittels dieser entgegen einer Federkraft aus seiner vorstehenden wirksamen Stellung in seine unwirksame Stellung überführbar ist. Dabei kann der mindestens eine Verriegelungsvorsprung 29, 30, wie im Falle der Zubehörteile nach den Fig. 8 bis 12, d. h. wie im Falle des Halteteils 16, durch eine gesonderte Federeinrichtung 33 beispielsweise in Gestalt einer Schraubenfeder beaufschlagt sein. Bei den Ausführungsbeispielen befindet sich die Schraubenfeder 33 zwischen den beiden Verriegelungsvorsprüngen 29, 30 und drückt diese voneinander weg, so daß sie normalerweise seitlich vorstehen. Die Verriegelungsvorsprünge 29, 30 und/oder die beiden Handhaben 31, 32 sind am Halteteil 16 bewegbar geführt und können zum überführen der Verriegelungsvorsprünge in ihre unwirksame Stellung aufeinander zu entgegen der Federkraft gedrückt werden.

Im Falle des Zubehörteils 13 (Fig. 6, 7) verhält es sich dagegen anders. Hier ist der jeweilige Verriegelungsvorsprung 29 bzw. 30 an einem entgegen seiner Eigenelastizität in seine unwirksame Stellung verschwenkbaren Schwenkarm 34 bzw. 35 des Zubehörteils angeordnet. Dabei kann der Schwenkarm 34 bzw. 35 einstückig an das Zubehörteil angeformt sein. Die Gelenkstellen für die Schwenkarme 34, 35 befinden sich an den Ansatzstellen 36, 37, wo die Schwenkarme angeformt sind.

Die Schwenkarme 34, 35 bilden beim Ausführungsbeispiel nach den Fig. 6, 7 mit ihrem außen liegenden Randbereich die Steckleiste 23 bzw. 24. Hierzu können die Schwenkarme eine den Steckleisten entsprechende Materialdicke aufweisen. Bei jedem Schwenkarm 34 bzw. 35 ist an sein freies Ende die Handhabe 31 bzw. 32 angeformt, beispielsweise in Gestalt einer geeigneten Einbuchtung und/oder einer vom Schwenkarm hochstehenden Handgriffpartie. In Fig. 7 befindet sich an den Stellen, zu denen die Bezugsstriche 31, 32 führen, eine solche Einbuchtung.

Die beiden Schwenkarme 34, 35 nehmen normalerweise ihre wirksame Stellung (Fig. 7) ein, aus der sie aufeinander zu in ihre unwirksame Stellung verschwenkt werden können.

Das aus den Fig. 6 und 7 hervorgehende Zubehörteil 13 ist ein Kopierringhalter, der einen Kopierring 38 hält. Ein solcher Kopierring wird ganz allgemein konzentrisch zum Fräswerkzeug angeordnet und weist einen größeren Durchmesser als dieses auf, so daß die Oberfräse mit dem Kopierring an einer Schablone anliegend dieser entlang über das Werkstück geführt werden kann, das mit einer der Schablone entsprechenden Konturierung bearbeitet wird.

Der Kopierring 38 befindet sich also bei seiner Anwendung innerhalb der Durchgriffsöffnung 7 des Maschinentischs 3. Dementsprechend weist das Zubehörteil 13, d. h. der Kopierringhalter, eine in die Durchtrittsöffnung 7 vorstehende und in dieser angeordnete Zubehörteilpartie 39 auf, die ringartige Gestalt besitzt und den Kopierring 38, zweckmäßigerweise austauschbar, umschließt. An diese Zubehörteilpartie 39 sind die beiden Schwenkarme 34, 35 angesetzt.

Der Maschinentisch 3 weist am Umfang der Durchgriffsausnehmung 7 an einer der Durchgangsöffnung 11 entgegengesetzten Stelle eine Steckausnehmung 40 auf, in die ein Steckvorsprung 41 eingesteckt werden kann, der an einer je nach Zubehörteil an diesem an einer in die Durchgriffsöffnung vorstehenden Zubehörteilpartie angeordnet ist, beim Zubehörteil 13 gemäß den Fig. 6 und 7 also an der den Kopierring 38 ringartig umschließenden Zubehörteilpartie 39. Das Zubehörteil 13 wird also im befestigten Zustand einerseits mittels der Verriegelungsvorsprünge 29, 30 und der Steckleisten 23, 24 und andererseits am Umfang der Durchgriffsöffnung 7 mittels des in die Steckausnehmung 40 gesteckten Steckvorsprungs 41 gehalten.

Prinzipiell könnte die Anordnung auch umgekehrt so getroffen sein, daß sich der Steckvorsprung am Maschinentisch und die Steckausnehmung am Zubehörteil befindet.

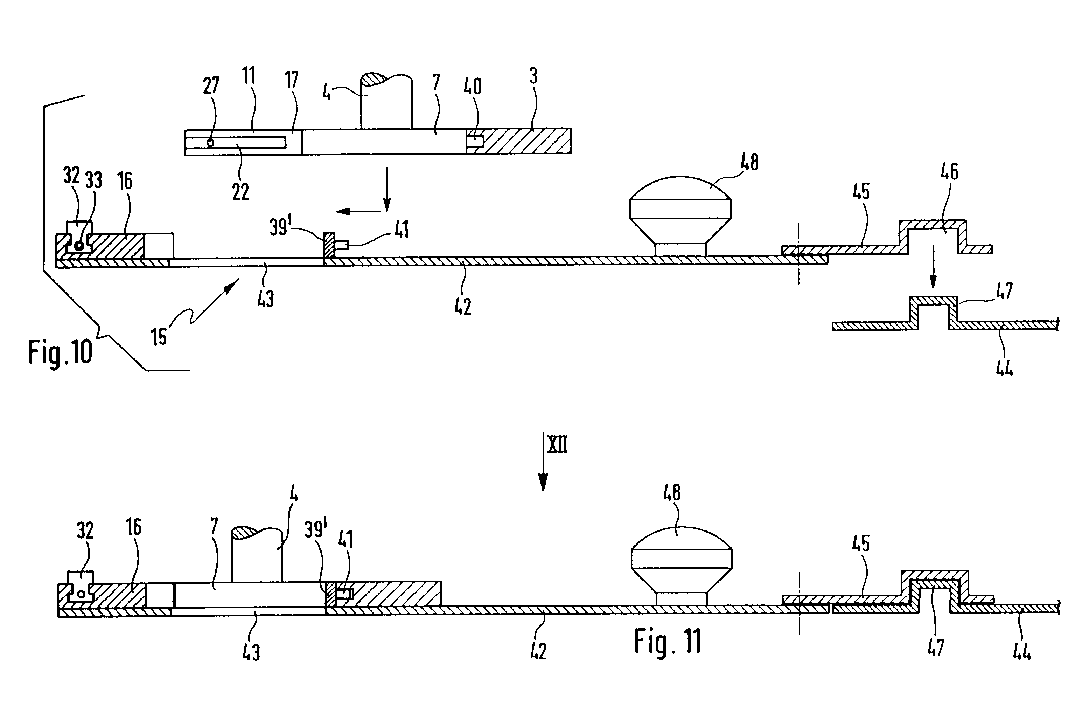

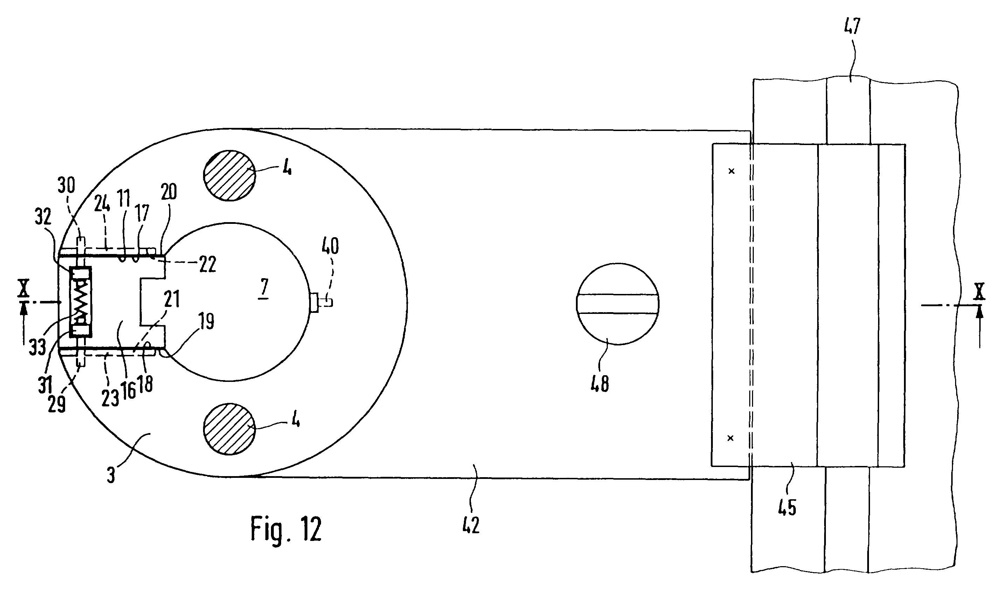

Auch bei dem Zubehörteil 15 der Fig. 10 und 11 ist ein solcher Steckvorsprung 41 vorhanden, der in die Steckausnehmung 40 gesteckt wird. Dabei handelt es sich bei diesem Zubehörteil um eine mit Bezug auf den Maschinentisch 3 größere Unterlegplatte 42 zum Vergrößern der Auflagefläche des Maschinentischs 3 auf dem Werkstück. Wünscht man also, daß die Oberfräse mit einer größeren Fläche als der Maschinentisch 3 auf dem Werkstück aufliegt, kann man das Zubehörteil 15 anbringen, so daß die Unterlegplatte 42 die Unterseite des Maschinentisches 3 bedeckt und über den Umfang des Maschinentischs vorsteht. Das Befestigen dieses Zubehörteils 15 erfolgt beim Ausführungsbeispiel dadurch, daß auf der eigentlichen Unterlegplatte 42 einerseits das in der Durchgangsöffnung 11 in der geschilderten Weise festzulegende Halteteil 16 und andererseits eine hochstehende und den Steckvorsprung 41 tragende Zubehörteilpartie 39' befestigt sind. Zum Verbinden des Zubehörteils 15 mit dem Maschinentisch 3 senkt man diesen auf die Unterlegplatte 42 so ab, daß der die Durchgangsöffnung 11 bildende Bereich des Maschinentischs 3 zwischen das Halteteil 16 und die Zubehörteilpartie 39' gelangt, wonach man die Oberfräse auf der Unterlegplatte 42 so verschiebt, daß das Zusammenstecken von Zubehörteil und Maschinentisch erfolgt. Das Absenken und Verschieben des Maschinentischs 3 ist in Fig. 10 durch die beiden nicht weiter bezeichneten Pfeile charakterisiert.

Die Unterlegplatte 42 weist eine der Durchgriffsöffnung 7 des Maschinentischs 3 entsprechende Öffnung 43 auf, so daß die Unterlegplatte das nach unten hin stehende Werkzeug nicht behindert.

Will man die Oberfräse 1 möglichst genau in linearer Richtung über das Werkstück bewegen, kann die Oberfräse mittels einer auf das Werkstück zu legenden Führungsschiene 44 geführt werden, wie sie beispielsweise in der DE-PS 32 43 565 in Zusammenhang mit einer Handkreissäge beschrieben ist. Zu diesem Zwecke kann an der Unterlegplatte 42 mit Abstand zum Maschinentisch 3 ein seitlich vorstehendes Führungsstück 45 mit einer Führungsnut 46 zum Aufsetzen auf eine Führungsrippe 47 od.dgl. der Führungsschiene 44 angeordnet sein. Die Unterlegplatte 42 ist gleich dick wie die Führungsschiene 44, so daß bei auf die Führungsschiene aufgesetztem Führungsstück 45 die Unterseite der Unterlegplatte 42 mit der Unterseite der Führungsschiene 44 fluchtet. Auf diese Weise wird die Oberfräse über die Führungsnut 46 und die Führungsrippe 47 der Führungsschiene 44 entlanggeführt. Um das Verschieben zu erleichtern, kann auf der Unterlegplatte 42 ein Handgriff 48 befestigt sein.

Das Halteteil 16 kann ein gesondert gefertigter Bestandteil des jeweiligen Zubehörteils sein, wie es bei der Unterlegplatte 42 der Fall ist.

Das Halteteil 16 geht aus Fig. 8 in Einzeldarstellung hervor. Es handelt sich um einen Formkörper mit parellelen Seiten 19, 20, an denen die Steckleisten 23, 24 und die Verriegelungsvorsprünge 29, 30 angeordnet sind.

Das Zubehörteil 14 nach Fig. 9 ist eine Zirkeleinrichtung, die ebenfalls mit dem Halteteil 16 versehen ist, das bei befestigtem Zubehörteil in die Durchgangsöffnung 11 eingreift. An dem Halteteil 16 ist eine Zirkelstange 49 befestigt, die in Richtung vom Maschinentisch 3 weg absteht. An der Zirkelstange 49 befindet sich eine unterhalb der Zeichenebene angeordnete Zentrierspitze 50, die mittels einer geeigneten Feststelleinrichtung 51 in beliebiger Längslage an der Zirkelstange 49 festgelegt werden kann. Hält man die Zentrierspitze 50 fest, kann man die über die Zirkelstange 49 mit ihr verbundene Oberfräse um die Zentrierspitze 50 verschwenken.

Aus Fig. 5 geht noch eine weitere Variante hervor, nämlich eine im mit der Oberfräse verbundenen Zustand zur Werkzeugachse 6 parallelachsige Führungsrolle 52, die sich unterhalb vom Maschinentisch 3 befindet und die bei der Anwendung am Werkstückrand 53 abrollt, dem entlang die Oberfräse und somit das Fräswerkzeug 5 geführt wird, um einen im Bereich des Werkstückrandes 53 vorhandenen Materialüberstand des Werkstücks wegzufräsen. Die Führungsrolle 52 gewährleistet dabei, daß das Werkzeug immer die gleiche Lage mit Bezug auf das Werkstück 8 einnimmt.

Die Führungsrolle 52 kann in Zusammenhang mit dem Staubabsaugbehältnis 12 verwendet werden, indem sie mit diesem verbunden ist. Dies kann beispielsweise dadurch erfolgen, daß die Führungsrolle 52 an einem das Staubabsaugbehältnis 12 in Längsrichtung durchquerenden Haltearm 54 sitzt, der an der Rückseite des Staubabsaugbhältnisses 12 aus diesem ragt und dort an einem vom Staubabsaugbehältnis 12 abstehenden Tragarm 55 od.dgl. in Längsrichtung 56 verstellbar und in der jeweiligen Lage feststellbar sitzt. Diese Möglichkeit der Halterung der Führungsrolle 52 soll nur beispielshaft erwähnt sein.

Abschließend wird noch darauf hingewiesen, daß in entsprechender Weise auch alle sonstigen möglichen Zubehörteile mit dem Maschinentisch 3 verbunden werden können.

## Patentansprüche

1. Als Handwerkzeugmaschine ausgebildete Oberfräse (1) mit einem werkstückseitigen Maschinentisch (3), der eine axiale Durchgriffsöffnung (7) für den Durchgriff des von oberhalb des Maschinentischs (3) nach unten zum Werkstück (8) ragenden Werkzeugs (5) umschließt, dadurch gekennzeichnet, daß der Maschinentisch (3) eine teilringartige Gestalt aufweist, so daß eine in der Tischebene radial von außen nach innen zur Durchgriffsöffnung (7) durchgehende und über die Höhe des Maschinentischs (3) durchgehend ausgebildete Durchgangsöffnung (11) zum Eingreifen eines am Maschinentisch (3) lösbar befestigbaren Zubehörteils (12,13,14, 15), z.B. ein Staubabsaugbehältnis, ein Kopierringhalter, eine Zirkeleinrichtung, eine Maschinentisch-Unterlegplatte usw., gebildet wird.

2. Oberfräse nach Anspruch 1, dadurch gekennzeichnet, daß das Zubehörteil (12, 13, 14, 15) über eine Steckeinrichtung und/oder eine Verriegelungseinrichtung am Maschinentisch (3) befestigbar ist.

3. Oberfräse nach Anspruch 2, dadurch gekennzeichnet, daß das Zubehörteil (12, 13, 14, 15) in radialer Richtung in die Durchgangsöffnung (11) steckbar und dabei an den die Durchgangsöffnung (11) seitlich begrenzenden Randflächen (17, 18) des Maschinentischs (3) geführt ist.

4. Oberfräse nach einem der Ansprüche 1 bis 3, dadurch gekennzeichnet, daß an den die Durchgangsöffnung (11) seitlich begrenzenden Randflächen (17, 18) des Maschinentischs (3) Befestigungsmittel und an im befestigten Zustand den Randflächen (17, 18) benachbarten Seiten (19, 20) des Zubehörteils (12, 13, 14, 15) mit den Befestigungsmitteln zusammenwirkende Befestigungs-Gegenmittel angeordnet sind.

5. Oberfräse nach Anspruch 4, dadurch gekennzeichnet, daß die Befestigungsmittel mindestens eine Stecknut (21, 22) oder Steckleiste und die Befestigungs-Gegenmittel mindestens eine zugeordnete Steckleiste (23, 23a, 23b, 23c, 24, 24a, 24b, 24c) bzw. Stecknut enthalten.

6. Oberfräse nach einem der Ansprüche 1 bis 5, dadurch gekennzeichnet, daß das Zubehörteil (12) in radialer Richtung verstellbar am Maschinentisch (3) befestigbar ist.

7. Oberfräse nach Anspruch 5 und 6, dadurch gekennzeichnet, daß die mindestens eine Steckleiste (23a, 23b, 23c, 24a, 24b, 24c) klemmend in die mindestens eine Stecknut (21, 22) eingreift.

8. Oberfräse nach einem der Ansprüche 1 bis 7, dadurch gekennzeichnet, daß das Zubehörteil (12) in unterschiedlichen Höhenlagen und/oder umdrehbar mit vertauschter Ober- und Unterseite am Maschinentisch befestigbar ist.

9. Oberfräse nach Anspruch 5 und 8, dadurch gekennzeichnet, daß an den Seiten (19, 20) des Zubehörteils (12) mehrere parallel mit Höhenabstand zueinander verlaufende Steckleisten (23a, 23b, 23c, 24a, 24b, 24c) oder Stecknuten angeordnet sind.

10. Oberfräse nach einem der Ansprüche 4 bis 9, dadurch gekennzeichnet, daß die Befestigungsmittel mindestens eine Verriegelungsausnehmung (27, 28) oder einen Verriegelungsvorsprung und die Befestigungs-Gegenmittel mindestens einen zugeordneten Verriegelungsvorsprung (29, 30) bzw. eine zugeordnete Verriegelungsausnehmung enthalten.

11. Oberfräse nach Anspruch 10, dadurch gekennzeichnet, daß der mindestens eine Verriegelungsvorsprung (29, 30) an einer Steckleiste (23, 24) oder Stecknut und die mindestens eine Verriegelungsausnehmung (27, 28) an einer Stecknut (21, 22) bzw. Steckleiste angeordnet ist.

12. Oberfräse nach Anspruch 10 oder 11, dadurch gekennzeichnet, daß an den beiden Seiten (19,20) des Zubehörteils (13, 14, 15) jeweils ein Verriegelungsvorsprung (29, 30) und an den beiden Randflächen (17, 18) des Maschinentischs (3) jeweils eine Verriegelungsausnehmung (27, 28) angeordnet ist.

13. Oberfräse nach einem der Ansprüche 10 bis 12, dadurch gekennzeichnet, daß der mindestens ein Verriegelungsvorsprung (29, 30) mittels einer Handhabe (31, 32) entgegen einer Federkraft aus seiner vorstehenden wirksamen Stellung in seine unwirksame Stellung bewegbar ist.

14. Oberfräse nach Anspruch 13, dadurch gekennzeichnet, daß der mindestens eine Verriegelungsvorsprung (29, 30) durch eine gesonderte Federeinrichtung (33) beaufschlagt ist.

15. Oberfräse nach Anspruch 13, dadurch gekennzeichnet, daß der mindestens eine Verriegelungsvorsprung (29, 30) an einem entgegen seiner Eigenelastizität in seine unwirksame Stellung verschwenkbaren Schwenkarm (34, 34) des Zubehörteils (13) angeordnet ist.

16. Oberfräse nach Anspruch 15, dadurch gekennzeichnet, daß der mindestens eine Schwenkarm (34, 35) einstückig an das Zubehörteil (13) angeformt ist.

17. Oberfräse nach einem der Ansprüche 1 bis 16, dadurch gekennzeichnet, daß der Maschinentisch (3) am Umfang der Durchgriffsöffnung (7) an einer der Durchgangsöffnung (11) entgegengesetzten Stelle eine Steckausnehmung (40) oder einen Steckvorsprung zum Zusammenstecken mit einem Steckvorsprung (41) bzw. einer Steckausnehmung aufweist, der bzw. die an einer je nach Zubehörteil an diesem an einer in die Durchgriffsöffnung (7) vorstehenden Zubehörteilpartie (39, 39') angeordnet ist.

18. Oberfräse nach einem der Ansprüche 1 bis 17, dadurch gekennzeichnet, daß das Zubehörteil (12) ein Staubabsaugbehältnis mit im befestigten Zustand der Durchgriffsöffnung (7) zugewandter offener Vorderseite (25) und einem Absaugstutzen (26) zum Anschließen einer Saugleitung ist.

19. Oberfräse nach Anspruch 18,dadurch gekennzeichnet, daß die Vorderseite (25) des Staubabsaugbehältnisses in Draufsicht von oben oder unten eingebaucht abgerundet ist.

20. Oberfräse nach Anspruch 18 oder 19, dadurch gekennzeichnet, daß an dem Staubabsaugbehältnis eine vor dessen Vorderseite (25) vorstehende, zur Werkzeugachse (6) parallelachsige Führungsrolle (52) angeordnet ist.

21. Oberfräse nach einem der Ansprüche 1 bis 17, dadurch gekennzeichnet, daß das Zubehörteil (14) eine Zirkeleinrichtung ist, die mit einem Halteteil (16) in die Durchgangsöffnung (11) eingreift und an dem Maschinentisch (3) befestigt ist, wobei von dem Halteteil (16) eine Zirkelstange (49) in Richtung vom Maschinentisch (3) weg absteht.

22. Oberfräse nach einem der Ansprüche 1 bis 17, dadurch gekennzeichnet, daß das Zubehörteil (13) ein bis in die Durchgriffsöffnung (7) vorstehender Kopierringhalter ist.

23. Oberfräse nach einem der Ansprüche 1 bis 17, dadurch gekennzeichnet, daß das Zubehörteil (15) eine mit Bezug auf den Maschinentisch (3) größere Unterlegplatte (42) zum Vergrößern der Auflagefläche des Maschinentisches (3) ist.

24. Oberfräse nach Anspruch 23, dadurch gekennzeichnet, daß an der Unterlegplatte (42) mit Abstand zum Maschinentisch (3) ein seitlich vorstehendes Führungsstück (45) zum Aufsetzen auf eine eine Führungsrippe (47) od.dgl. aufweisende, auf das Werkstück zu legende Führungsschiene (44) angeordnet ist.

## Claims

1. Routing machine (1) in the form of a hand-operated machine tool, with a machine table (3) on the workpiece side which encloses an axial through hole (7) for the penetration of the tool (5) from above the machine table (3) downwards to the workpiece (8), characterized in that the machine table (3) has a partial ring-like shape so that a through opening (11) is formed, extending continuously at the level of the table, radially from the outside and inwards to the through hole (7), and continuous over the level of the machine table (3), to engage an accessory (12, 13, 14, 15), e.g. a dust collector receptacle, a copying ring holder, a divider unit, a machine table support plate, etc., which may be releasably fastened to the machine table (3).

2. Routing machine according to claim 1, characterized in that the accessory (12, 13, 14, 15) may be fastened to the machine table (3) via a plug-in device and/or a locking device.

3. Routing machine according to claim 2, characterized in that the accessory (12, 13, 14, 15) may be inserted radially in the through opening (11), at the same time being guided at the boundary surfaces (17, 18) of the machine table (3) which border the through opening (11) to the side.

4. Routing machine according to according to any of claims 1 to 3, characterized in that fastening means are provided at the boundary surfaces (17, 18) of the machine table (3) which border the through opening (11) to the side, and that counter-fastening means working in conjunction with the fastening means are provided at sides (19, 20) of the accessory (12, 13, 14, 15) which are adjacent in the fastened state of the boundary surfaces (17, 18).

5. Routing machine according to claim 4, characterized in that the fastening means include at least one insertion slot (21, 22) or insertion rail and the counter-fastening means include at least one assigned insertion rail (23, 23a, 23b, 23c, 24, 24a, 24b, 24c) and insertion slot respectively.

6. Routing machine according to any of claims 1 to 5, characterized in that the accessory (12) may be fastened to the machine table (3) so as to be radially adjustable.

7. Routing machine according to claims 5 and 6, characterized in that the insertion rail or rails (23a, 23b, 23c, 24a, 24b, 24c) clamp into the insertion slot or slots (21, 22).

8. Routing machine according to any of claims 1 to 7, characterized in that the accessory (12) may be fastened to the machine table in different vertical positions and/or rotatably with top and bottom interchanged.

9. Routing machine according to claims 5 and 8, characterized in that several insertion rails (23a, 23b, 23c, 24a, 24b, 24c) or insertion slots are located at the sides (19, 20) of the accessory (12) running parallel to one another at vertical intervals.

10. Routing machine according to any of claims 4 to 9, characterized in that the fastening means have at least one locking recess (27, 28) or locking projection, and the counter-fastening means have at least one assigned locking projection (29, 30) or assigned locking recess respectively.

11. Routing machine according to claim 10, characterized in that the locking projection or projections (29, 30) are located on an insertion rail (23, 24) or insertion slot, and the locking recess or recesses (27, 28) are located on an insertion slot (21, 22) or insertion rail respectively.

12. Routing machine according to claim 10 or 11, characterized in that a locking projection (29, 30) is provided on each side (19, 20) of the accessory (13, 14, 15), and a locking recess (27, 28) is provided on each of.the two boundary surfaces (17, 18) of the machine table (3).

13. Routing machine according to any of claims 10 to 12, characterized in that the locking projection or projections (29, 30) is or are movable by means of a handle (31, 32), against a spring force, from the projecting effective position into the inoperative position.

14. Routing machine according to claim 13, characterized in that a separate spring device (33) acts upon the locking projection or projections (29, 30).

15. Routing machine according to claim 13, characterized in that the locking projection or projections (29, 30) are located on a swivel arm (34, 34) of the accessory (13) which is able to swing into its inoperative position against its inherent elasticity.

16. Routing machine according to claim 15, characterized in that the swivel arm or arms (34, 35) forms or form an integral part of the accessory (13).

17. Routing machine according to any of claims 1 to 16, characterized in that the machine table (3) has at the periphery of the through hole (7), at a point opposite the through opening (11), a socket (40) or a plug projection for mating with a plug projection (41) or socket respectively, and which are located, depending on the accessory, on a section (39, 39') of the accessory which projects into the through hole (7).

18. Routing machine according to any of claims 1 to 17, characterized in that the accessory (12) is a dust collector receptacle which, when attached, has an open front side (25) facing the through hole (7) and a suction nozzle (26) for the connection of a suction line.

19. Routing machine according to claim 18, characterized in that the front side (25) of the dust collector receptacle is rounded inwards when viewed from above or below.

20. Routing machine according to claim 18 or 19, characterized in that a guide roller (52) with axis parallel to the tool axis (6) is located on the dust collector receptacle, projecting from its front side (25).

21. Routing machine according to any of claims 1 to 17, characterized in that the accessory (14) is a divider unit, engaging in the through opening (11) with a retaining section (16) and fastened to the machine table (3), wherein one divider rod (49) extends away from the retaining section (16) towards the machine table (3).

22. Routing machine according to any of claims 1 to 17, characterized in that the accessory (13) is a copying ring holder extending as far as the through hole (7).

23. Routing machine according to any of claims 1 to 17, characterized in that the accessory (15) is a support plate (42), larger than the machine table (3), for enlarging the support surface of the machine table (3).

24. Routing machine according to claim 23, characterized in that the support plate (42) is provided, with clearance from the machine table (3), with a sidewards-extending guide element (45) for placing on a guide rail (44), which has a guide rib (47) or similar, to be laid on the workpiece.

## Revendications

1. Défonceuse (1) conformée en machine-outil portative, comprenant une table de machine-outil (3), située du côté de la pièce à usiner, qui entoure une ouverture de pénétration (7) axiale permettant la pénétration de l'outil (5) qui dépasse, au-dessus de la table (3), en direction du bas et de la pièce à usiner (8), caractérisée en ce que la table (3) présente une forme partiellement annulaire, de sorte qu'est formée une ouverture formant passage (11), radiale dans le plan de la table, conduisant en continu de l'extérieur vers l'intérieur en direction de l'ouverture de pénétration (7), et continue sur toute la hauteur de la table (3), servant à l'engagement d'un accessoire (12, 13, 14, 15), susceptible d'être fixé de façon détachable sur la table (3), par exemple un récipient d'aspiration des poussières, un support de bague de copie, un dispositif formant compas, une rallonge pour table de machine-outil, etc.

2. Défonceuse selon la revendication 1, caractérisée en ce que l'accessoire (12, 13, 14, 15) est susceptible d'être fixé sur la table (3) au moyen d'un dispositif d'enfichage et/ou d'un dispositif de verrouillage.

3. Défonceuse selon la revendication 2, caractérisée en ce que l'accessoire (12, 13, 14, 15) est susceptible d'être introduit, en direction radiale, dans l'ouverture formant passage (11) et, dans ce cas, est guidé sur les surfaces périphériques (17, 18), délimitant latéralement l'ouverture formant passage (11), de la table (3).

4. Défonceuse selon l'une des revendications 1 à 3, caractérisée en ce que des moyens de fixation sont prévus, sur les surfaces périphériques (17, 18) qui délimitent latéralement l'ouverture formant passage (11) de la table (3), ainsi que des moyens de fixation complémentaires, présents, à l'état fixé, sur des côtés (19, 20) adjacents aux surfaces périphériques (17, 18) de l'accessoire (12, 13, 14, 15), qui coopèrent avec les moyens de fixation.

5. Défonceuse selon la revendication 4, caractérisée en ce que les moyens de fixation comprennent au moins une rainure d'encliquetage (21, 22) ou une barrette d'encliquetage et en ce que les moyens de fixation complémentaires comprennent au moins une barrette d'encliquetage correspondante (23, 23a, 23b, 23c, 24, 24a, 24b, 24c) ou une rainure d'encliquetage.

6. Défonceuse selon l'une des revendications 1 à 5, caractérisée en ce que l'accessoire (12) est susceptible d'être fixé sur la table (3) avec possibilité de réglage dans la direction radiale.

7. Défonceuse selon les revendications 5 et 6, caractérisée en ce que la barrette d'encliquetage (23a, 23b, 23c, 24a, 24b, 24c), au nombre minimum d'une, s'engage dans la rainure d'encliquetage (21, 22), au nombre minimum d'une, en y étant coincée .

8. Défonceuse selon l'une des revendications 1 à 7, caractérisée en ce que l'accessoire (12) est susceptible d'être fixé sur la table à différentes hauteurs et/ou en pouvant être retourné et permuter sa face supérieure et sa face inférieure.

9. Défonceuse selon les revendications 5 et 8, caractérisée en ce que, sur les côtés (19, 20) de l'accessoire (12), sont prévues plusieurs barrettes d'encliquetage (23a, 23b, 23c, 24a, 24b, 24c) ou rainures d'encliquetage parallèles, présentant un écart entre elles dans le sens de la hauteur.

10. Défonceuse selon l'une des revendications 4 à 9, caractérisée en ce que les moyens de fixation comprennent au moins un évidement de verrouillage (27, 28) ou une saillie de verrouillage et les moyens de fixation complémentaires comprennent au moins une saillie de verrouillage (29, 30) correspondante ou un évidement de verrouillage associé.

11. Défonceuse selon la revendication 10, caractérisée en ce que la saillie de verrouillage (29, 30), au nombre minimum d'une, est présente sur une barrette d'encliquetage (23, 24) ou une rainure d'encliquetage et en ce que l'évidement de verrouillage (27, 28), au nombre minimum d'un, est présent sur une rainure d'encliquetage (21, 22) ou sur une barrette d'encliquetage.

12. Défonceuse selon la revendication 10 ou 11, caractérisée en ce que, des deux côtés (19, 20) de l'accessoire (13, 14, 15), est prévue respectivement une saillie de verrouillage (29, 30) et en ce que, sur les deux surfaces périphériques (17, 18) de la table (3), est prévu respectivement un évidement de verrouillage (27, 28).

13. Défonceuse selon l'une des revendications 10 à 12, caractérisée en ce que la saillie de verrouillage (29, 30), au nombre minimum d'une, est susceptible d'être amenée à passer, au moyen d'une manette (31, 32), à l'encontre d'une force élastique, de sa position active dans laquelle elle dépasse à sa position inactive.

14. Défonceuse selon la revendication 13, caractérisée en ce que la saillie de verrouillage (29, 30), au nombre minimum d'une, est sollicitée par un dispositif élastique (33) séparé.

15. Défonceuse selon la revendication 13, caractérisée en ce que la saillie de verrouillage (29, 30), au nombre minimum d'une, est placée sur un bras pivotant (34, 35) de l'accessoire (13) qui peut pivoter, à l'encontre de son élasticité intrinsèque, pour passer dans sa position inactive.

16. Défonceuse selon la revendication 15, caractérisée en ce que le bras pivotant (34, 35), au nombre minimum d'un, ne forme qu'une seule pièce avec l'accessoire (13).

17. Défonceuse selon l'une des revendications 1 à 16, caractérisée en ce que la table (3), à la périphérie de l'ouverture de pénétration (7), présente, en un point situé en regard de l'ouverture formant passage (11), un évidement d'encliquetage (40) ou une saillie d'encliquetage permettant son encliquetage avec une saillie d'encliquetage (41) ou un évidement d'encliquetage, qui, en fonction de l'accessoire, est présent(e) sur une partie d'accessoire (39, 39') qui dépasse dans l'ouverture de pénétration (7).

18. Défonceuse selon l'une des revendications 1 à 17, caractérisée en ce que l'accessoire (12) est un récipient d'aspiration des poussières présentant une face avant (25) ouverte, orientée vers l'ouverture de pénétration (7) à l'état fixé, et présentant une tubulure d'aspiration (26) destinée à être raccordée à une conduite d'aspiration.

19. Défonceuse selon la revendication 18, caractérisée en ce que la face avant (25) du récipient d'aspiration des poussières, vue en plan à partir du haut ou du bas, est arrondie et concave.

20. Défonceuse selon la revendication 18 ou 19, caractérisée en ce qu'est prévu, sur le récipient d'aspiration des poussières, un galet de guidage (52) dépassant de sa face avant (25), ayant un axe parallèle à l'axe (6) de l'outil.

21. Défonceuse selon l'une des revendications 1 à 17, caractérisée en ce que l'accessoire (14) est un dispositif formant compas qui pénètre, par une partie de maintien (16), dans l'ouverture formant passage (11) et est fixé sur la table (3), une tige de compas (49) dépassant de la partie de maintien (16) en direction de la table (3).

22. Défonceuse selon l'une des revendications 1 à 17, caractérisée en ce que l'accessoire (13) est un support de bague de copie qui dépasse jusque dans l'ouverture de pénétration (7).

23. Défonceuse selon l'une des revendications 1 à 17, caractérisée en ce que l'accessoire (15) est une rallonge (42) de superficie supérieure à celle de la table (3), qui est destinée à agrandir la surface d'appui de la table (3).

24. Défonceuse selon la revendication 23, caractérisée en ce qu'est prévu, sur la rallonge (42), à distance de la table (3), un élément de guidage (45) dépassant latéralement, qui est destiné à s'appliquer sur un rail de guidage (44), présentant une nervure de guidage (47) ou similaire, à placer sur la pièce à usiner.
